# DEMANDE DE BREVET EUROPEEN

(11) **EP 3 438 831 A1**
(43) Date de publication de la demande: **06.02.2019**
(21) Numéro de dépôt: 18186963.7
(22) Date de dépôt: 02.08.2018
(51) Int. Cl.: G06F 11/34, G06F 11/30

(54) **PROCEDE DE VALIDATION DE MUTUALISATION DE BRIQUES APPLICATIVES SUR UNE INFRASTRUCTURE INFORMATIQUE**

(30) Priorité: 02.08.2017 FR 1757418
(71) Demandeur: BULL SAS, 78340 Les Clayes sous Bois (FR)
(72) Inventeur: ROCHETTE, Florent, 38170 Seyssinet Pariset (FR); DEMEILLIEZ, Bruno, 38380 Saint Laurent du Pont (FR); GERMAIN, Christophe, 38100 Grenoble (FR)
(74) Mandataire: A.P.I. Conseil

(57) **Abrégé**

L'invention porte sur un système et un procédé de validation de la mutualisation de briques applicatives sur une infrastructure informatique. Le système comprend dispositif de simulation (10) comportant ;
- une base de donnée (12) configurée pour enregistrer un plan de charge (421);
- un module d'application de contrainte (11) configuré pour induire une charge sur la structure informatique (21) basée sur ledit plan de charge (421) ;
- un module de surveillance (15) configuré pour mesurer l'impact de ladite charge induite avec la ou les briques applicatives en production (211, 212) et configuré pour mesurer la consommation des ressources et des niveaux de service; et
- un module de validation (16), configuré pour comparer des données de consommation des ressources et de niveaux de service mesurées à des valeurs maximales prédéterminées, et, en absence de dépassement des valeurs maximales prédéterminées, à valider la mutualisation.

## Description

L'invention concerne le domaine de la surveillance de production et celui de l'optimisation des coûts d'infrastructure. Plus particulièrement, l'invention concerne un procédé de validation de la mutualisation de briques applicatives sur une infrastructure informatique ainsi que le système permettant de mettre en oeuvre un tel procédé.

### [Art antérieur]

Les infrastructures informatiques représentent une grande partie de l'investissement d'une entreprise. Leurs bonnes gestions est un enjeu stratégique pour pouvoir maîtriser leurs coûts, mais également pour garantir un accès fiable et optimiser aux différentes données métiers du système d'information.

Les directeurs de systèmes d'information doivent généralement faire évoluer leur infrastructure informatique à la hausse ou à la baisse de façon à toujours proposer des services applicatifs métiers performants et adaptés à la demande de leur société. Par exemple, suite à une augmentation d'un certain groupe d'utilisateurs, il peut y avoir une augmentation de la consommation des ressources par certaines applications métiers et donc il peut être avantageux de réorganiser cette infrastructure informatique. Un changement de briques applicatives, une modification d'une brique applicative entrainant une réduction de sa consommation de ressource ou encore d'une amélioration d'une infrastructure informatique peuvent entrainer une augmentation des ressources disponibles et donc un souhait de réorganisation de briques applicatives.

Une façon d'optimiser les coûts est la mutualisation des infrastructures qui consiste à héberger sur un même serveur plusieurs briques applicatives. Une des principales problématiques lors de ces opérations de mutualisation est de pouvoir valider en amont qu'il n'y aura pas de saturation de ressources lorsque l'on fera coexister sur un même serveur plusieurs briques applicatives. En effet, une telle réorganisation des briques applicatives au sein d'une pluralité de structures informatique peut entrainer de nombreuses difficultés. Par exemple, lorsqu'une application est utilisée en production sur une infrastructure informatique, les demandes de ressource de l'application ne sont pas régulières, soit car il y a déclenchement de taches périodiques (traitements batch) soit car l'usage de l'application se fait de façon saisonnière (période de clôture, lancement des campagnes...). Ce phénomène se retrouve également au niveau des différentes briques applicatives qui composent une application. En outre, chaque brique aura une saisonnalité qui pourra être différente de celle de l'application ou des autres briques qui composent la chaine applicative.

Dans ce contexte, il existe des solutions permettant de connaître le comportement des utilisateurs et le taux d'utilisation des ressources pour chacune des briques applicatives considérées. Le document US2015/186236 expose une méthode de capture de données et la mise en place de test évolutif. Lors de ce test, il est possible de vérifier les possibilités de mutualisation d'applications basées essentiellement sur la base d'une simple addition des consommations de ressources. En outre, il ne suffit pas de vérifier que ces additions n'atteignent pas les niveaux maximums d'utilisations de ressources car dès qu'un niveau significatif d'utilisation de ressources est atteint, il peut y avoir des impacts sur d'autres ressources qu'il est très difficile de quantifier ou prévoir. Ainsi, ces méthodes ne permettent pas de prédire les conséquences d'une mutualisation et se contentent essentiellement de rejouer les données capturées. Il existe également des méthodes pour vérifier les possibilités de mutualisation d'applications ou de briques applicatives telles que décrites dans le document US2009/037164. Néanmoins, ces dernières sont basées essentiellement sur la simple addition des consommations de ressources et cela ne suffit pas pour s'assurer qu'il n'y aura pas de saturation de ressources sur le serveur. De plus, ces tests sont généralement réalisés dans un environnement contrôlé et à l'abri d'influences extérieures (environnement d'intégration). Or, dans un contexte réel, le système d'information n'est pas isolé et les résultats des tests de performance fait en environnement d'intégration ne sont généralement pas pertinents pour décider quel doit être la configuration à utiliser dans un environnement de production. En effet, il ne suffit pas de vérifier que ces additions n'atteignent pas les niveaux maximums d'utilisations de ressources car dès qu'un niveau significatif d'utilisation de ressources est atteint, il peut y avoir des impacts sur d'autres ressources qu'il est très difficile de quantifier ou prévoir.

Ainsi, il existe un besoin pour de nouveaux procédés de validation de la mutualisation de briques applicatives, en amont, capables de répondre aux problèmes engendrés par les procédés existantes.

### Problème technique]

L'invention a donc pour but de remédier aux inconvénients de l'art antérieur. En particulier, l'invention a pour but de déterminer la faisabilité de l'hébergement des briques applicatives des applications du système d'information sur une même structure informatique. Ces tests peuvent être généralisés afin d'optimiser l'utilisation de l'ensemble de l'environnement de production.

Ainsi l'invention présente l'avantage de mieux prédire les conséquences d'une mutualisation de briques applicatives sur une même structure informatique. Par exemple, le procédé selon l'invention permet de mieux prédire la conséquence d'une mutualisation de briques applicative afin d'optimiser l'agencement de briques applicatives au sein d'une infrastructure informatique. Ainsi, la présente invention vise à permettre de faire, en amont de l'opération de mutualisation, une simulation des consommations de ressources des différentes briques que l'on souhaite faire coexister sur un serveur en parallèle de l'utilisation classique d'autres briques applicative. En outre, elle permet également de se concentrer sur des périodes dites de « pics de consommation » afin de s'assurer qu'il n'y aura pas de saturation en production.

### [Brève description de l'invention]

A cet effet, l'invention porte sur un procédé de validation de la mutualisation de briques applicatives sur une infrastructure informatique, ladite infrastructure informatique hébergeant, sur une structure informatique de production, une ou plusieurs briques applicatives en production, ledit procédé étant caractérisé en ce qu'il comprend les étapes suivantes :
- Acquisition d'un plan de charge représentatif du fonctionnement d'une première brique applicative à tester, ledit plan de charge comportant des données relatives au niveau d'utilisation de ressources par ladite première brique applicative à tester, en fonction du temps ;
- Induction d'une charge sur la structure informatique de production basée sur ledit plan de charge ;
- Mesure de l'impact, sur la structure informatique de production, de la charge induite combinée à la ou les briques applicatives en production comportant :
   a) la mesure de la consommation des ressources de la structure informatique de production, et
   b) la mesure des niveaux de service pour la ou les briques applicatives en production ; et
- Comparaison des données de mesure a) et b) obtenues, à des valeurs maximales prédéterminées de consommation de ressources et de niveau de services et, en absence de dépassement des valeurs maximales prédéterminées, validation de la mutualisation.

La mise en oeuvre de cet enchainement d'étapes permet de mieux simuler l'impact d'une mutualisation de brique applicative sur une même structure informatique. L'impact est principalement considéré en termes de niveau de consommation des ressources et en niveau de services. Ce suivi de la consommation globale des ressources ainsi que du niveau de service des briques applicative utilisées en production permet de s'assurer que cette mutualisation n'entrainera pas une réduction des performances perceptible par les utilisateurs. Contrairement aux méthodes de l'art antérieur, les consommations de ressources et les niveaux de services sont mesurés directement sur en environnement de production (e.g. la structure informatique de production) alors que d'une part les briques applicatives en production sont utilisées et d'autre une induction de charge entraine la génération de contraintes sur la structure informatique simulant une utilisation des briques applicatives à tester. Cela permet d'obtenir une meilleure prédiction de l'impact de la mutualisation.

**Selon d'autres caractéristiques optionnelles du procédé :**
- lors d'une première induction de charge, la charge induite présente à une intensité équivalente à 90 % ou moins du niveau d'utilisation de ressources de ladite première brique applicative à tester. En effet, cela permet de réduire les risques de dysfonctionnement sur la structure informatique de production tout en permettant d'évaluer l'impact de cette charge dans des conditions de production. De préférence, la charge induite présente à une intensité équivalente à 80 % ou moins, de façon plus préférée 70 % ou moins, de façon encore plus préférée 50 % ou moins du niveau d'utilisation de ressources de ladite première brique applicative à tester.
- en outre, lorsque charge induite présente à une intensité équivalente à 90 % ou moins du niveau d'utilisation de ressources de ladite première brique applicative à tester et en absence de dépassement des valeurs maximales prédéterminées lors de l'étape de comparaison, l'étape d'induction de charge est répétée avec une charge induite présentant une intensité de charge supérieure à l'intensité de charge de la précédente induction et, lors de l'étape de comparaison, la mutualisation est validée seulement si la charge induite présente une intensité de charge équivalente à 100 % ou plus du niveau d'utilisation de ressources de ladite première brique applicative à tester. Ainsi, il y a une réalisation d'une boucle entre les étapes d'induction et de comparaison de façon à faire progressivement augmenter les contraintes issues de la brique à tester sur la structure informatique de production et à ne valider une brique applicative qu'après qu'elle ait été testée à 100 % de son niveau d'utilisation de ressources.

- l'induction d'une charge, sur la structure informatique de production, basée sur le plan de charge comporte les sous étapes suivantes :
   - une étape d'extraction, lors de laquelle des codes d'instructions sont extrait du plan de charge, lesdits codes d'instructions étant aptes à générer des contraintes, sur la structure informatique de production, à une intensité équivalente aux niveaux d'utilisation de ressources de la brique applicative à tester ;
   - une étape de configuration de la charge, lors de laquelle les codes d'instructions sont modifiés de façon à ce que lesdits codes d'instructions modifiés soient aptes à générer des contraintes, sur la structure informatique de production, à une intensité inférieure aux niveaux d'utilisation de ressources par la brique applicative à tester ; et
   - une étape de déploiement de la charge lors de laquelle les codes d'instructions modifiés sont copiés sur la structure informatique de production.
- le plan de charge est établit selon un référentiel de temps calendaire et est synchronisé lors de l'étape d'induction avec la date à laquelle le procédé de validation est mis en oeuvre. Etant donné que le niveau d'utilisation de ressource par une brique applicative peut fluctuer dans le temps, cela permet de synchroniser les niveaux d'utilisation de ressources par exemple en fonction des heures dans la journée de façon à mieux simuler une utilisation réelle de la brique applicative à tester sur la structure informatique de production.
- le procédé selon l'invention comporte une étape supplémentaire correspondant, une fois qu'une mutualisation est considérée comme validée, à une répétition des étapes du procédé avec une ou plusieurs autres briques applicatives à tester. Ainsi, il est possible de répéter le procédé avec d'autres briques applicatives de façon à valider la mutualisation d'une pluralité de briques applicatives sur une même structure informatique de production.
- le procédé selon l'invention comporte en outre une étape préalable de mesure de la consommation des ressources par une brique applicative de façon à établir un plan de charge comportant des données relatives au niveau d'utilisation de ressources par ladite brique applicative, en fonction du temps.
- l'étape préalable de mesure de la consommation des ressources par une brique applicative à tester est réalisée pour plusieurs briques applicatives à tester, de préférence lorsque ces briques applicatives à tester sont en production.
- l'étape préalable de mesure de la consommation des ressources est réalisée sur une période d'au moins trois mois, de préférence d'au moins six mois et de façon encore plus préférée d'au moins douze mois de façon à déterminer une périodicité de pics de consommation des ressources par la brique applicative.
- l'étape d'induction de la charge est réalisée sur une période de temps suffisante pour mettre en oeuvre au moins trois pic de consommation de ressources, de préférence au moins cinq pics de consommation de ressources.
- le procédé selon l'invention comporte en outre une étape d'établissement d'un plan d'agencement de briques applicatives sur des structures informatique, ladite étape d'établissement d'un plan d'agencement comportant les sous-étapes suivantes :
   - Acquisition de plans de charge représentatifs du fonctionnement des briques applicatives,
   - Définition de seuils maximum d'utilisation des ressources pour chaque structure informatique, et
   - Etablissement dudit plan d'agencement de briques applicatives ayant une probabilité réduite d'occurrence de période critique, ladite période critique étant un intervalle de temps durant lequel la consommation d'une ressource dépasse un seuil préalablement défini d'utilisation maximum.
- le procédé comporte une sous-étape de détermination de la périodicité de la consommation en ressources des briques applicatives en production. La détermination de la périodicité correspond à l'analyse de la consommation dans le temps de façon à identifier des schémas de répétition permettant de réduire les données de mesure de consommation à la période de temps se répétant la plus courte possible.

L'invention porte en outre sur un système de validation de la mutualisation de briques applicatives sur une infrastructure informatique, ladite infrastructure informatique hébergeant, sur une structure informatique de production, une ou plusieurs briques applicatives en production, ledit système étant caractérisé en ce qu'il comprend un dispositif de simulation, ledit dispositif de simulation comportant ;
- une base de donnée apte à, de préférence configurée pour, enregistrer un plan de charge représentatif du fonctionnement d'une première brique applicative à tester, ledit plan de charge comportant des données relatives aux niveaux d'utilisation de ressources par ladite première brique applicative à tester, en fonction du temps ;
- un module d'application de contrainte apte, de préférence configuré pour, à induire une charge sur la structure informatique de production basée sur le plan de charge ;
- un module de surveillance apte, de préférence configuré pour, à mesurer l'impact de la combinaison, sur la structure informatique de production, de ladite charge induite avec la ou les briques applicatives en production et configuré pour :
   ∘ a) mesurer la consommation des ressources de la structure informatique de production, et
   ∘ b) mesurer des niveaux de service pour la ou les briques applicatives en production ; et
- un module de validation, apte à, de préférence configuré pour, comparer des données de consommation des ressources et de niveaux de service mesurées a) et b) à des valeurs maximales prédéterminées de consommation de ressources et de niveau de services, et, en absence de dépassement des valeurs maximales prédéterminées, à valider la mutualisation.

D'autres avantages et caractéristiques de l'invention apparaitront à la lecture de la description suivante donnée à titre d'exemple illustratif et non limitatif, en référence aux Figures annexées qui représentent :
- Figure 1, le taux d'occupation des processeurs (« central processing unit» - CPU) cumulé (Fig.1B & Fig.1C) ou non (Fig.1A) de différentes structures informatiques, en fonction du temps, par des briques applicatives (B1, B2, B3).
- Figure 2, une représentation schématique d'un procédé de validation de la mutualisation de briques applicatives selon l'invention. Les étapes encadrées par des pointillés sont facultatives.
- Figure 3, une représentation schématique fonctionnelle non limitative d'un mode de réalisation pour valider la mutualisation de briques applicatives selon l'invention.
- Figure 4, une représentation schématique d'une étape de génération d'un plan de charge selon l'invention.
- Figure 5, une représentation schématique d'une étape de génération d'un plan de d'agencement selon l'invention. Les étapes encadrées par des pointillés sont facultatives.
- Figure 6, une vue schématique fonctionnelle non limitative d'un mode de réalisation pour un système de validation de la mutualisation de briques applicatives selon l'invention.

### [Description de l'inventionl

Dans la suite de la description, on entend par « Ressource » ou « Ressource matérielle », des paramètres, des capacités ou des fonctions de dispositifs informatiques permettant le fonctionnement d'une brique applicative, d'une application ou d'une chaine applicative. Un même dispositif informatique est associé généralement à plusieurs ressources. De même, une même ressource est généralement partagée entre plusieurs chaines applicatives. Par exemple, le terme « ressource » peut inclure : des disques réseaux caractérisé par exemple par leurs entrées/sorties, la lecture/écriture sur des disques, le taux d'utilisation de la mémoire, un réseau caractérisé par sa bande passante, un processeur caractérisé par exemple par son utilisation (en pourcent) ou le taux d'occupation de ses caches, une mémoire vive caractérisée par la quantité allouée, ou de façon plus globale le temps de latence d'un processus ou les pertes de paquets.

Par « infrastructure informatique », on entend au sens de l'invention un ensemble de structures informatiques (i.e. dispositifs informatiques) apte à faire fonctionner une application ou une chaine applicative. La structure informatique peut être un serveur et peut par exemple être composée d'un serveur de présentation, d'un serveur métier et d'un serveur de données. L'infrastructure informatique peut également être un serveur test avec les mêmes ressources qu'un serveur de production ou bien un clone d'un serveur virtuel de production. De façon préférée, la structure informatique est un serveur.

L'expression « chaine applicative » au sens de l'invention correspond à un ensemble d'applications, reliées entre elles par un flot d'information et visant à proposer, au travers de plusieurs processus, une ou plusieurs fonctionnalités pouvant faire l'objet d'un accord de niveau de service (SLA pour « Service-level agreement »).

L'expression «brique applicative» au sens de l'invention correspond à une composante d'une application. La combinaison de briques applicatives est souvent nécessaire pour le fonctionnement d'applications, notamment d'applications métier, comme par exemple une application Web, une plateforme de partage de contenu ou une plateforme de calcul. Les briques applicatives de l'infrastructure informatique incluent, par exemple, un serveur ftp, un serveur de messagerie électronique, un serveur d'application Java et/ou une ou plusieurs bases de données.

L'expression « niveau de service » au sens de l'invention correspond à une qualité de service à laquelle peut s'engager un tiers et ainsi garantir de bonnes performances pour les applications critiques d'une organisation. Ainsi, le niveau de service peut correspondre à des critères objectifs tels que des débits et des temps de réponse par brique applicative ou bien subjectif, et prendre par exemple la forme d'une échelle de valeur, numérique ou non, correspondant à une appréciation de la qualité du niveau de service. Le niveau de service peut correspondre à une ou plusieurs valeurs.

Par « sonde » ou « sonde informatique », on entend au sens de l'invention un logiciel associé à un équipement qui permet d'effectuer, de gérer et faire remonter vers un équipement informatique des mesures destinées à informer entre autres de l'état de fonctionnement des ressources ou de niveau de service.

Par « plan de charge », on entend au sens de l'invention un fichier de configuration de la charge ou contrainte à appliquer à une structure informatique. Le fichier de configuration peut par exemple être un fichier, ou un ensemble de fichiers, qui permet d'associer plusieurs données ou champs. Cette association de champs est aussi appelée un enregistrement de charge. Un tel fichier de configuration de charge est, par exemple, un fichier XML, un fichier CSV, un fichier INI, un fichier JSON.... Un fichier de configuration de charge peut comporter un ou plusieurs enregistrements de configuration.

Par « seuil prédéterminé d'utilisation maximum », on entend au sens de l'invention une valeur maximale de paramètre associé à chaque ressource permettant un bon fonctionnement de ladite ressource. Par exemple, cela correspond aux limites maximales acceptables de consommations de ressources pour une structure informatique hébergeant une ou plusieurs briques applicatives. Ces limites peuvent être réelles ou hypothétiques et correspondent généralement un niveau d'utilisation au-delà duquel des dysfonctionnements peuvent survenir et ayant pour conséquence un arrêt de la ressource, de la structure informatique ou bien à tout le moins des baisses de qualités de service. Par exemple, le tableau 1 ci-dessous présente les seuils prédéterminés d'utilisation maximum pour trois ressources.

**Tableau 1**

| | CPU1 | Utilisation réseau | Utilisation Disque |
|---|---|---|---|
| Seuil prédéterminé d'utilisation maximum | 80 % | 350 KBps | 60 o/s |

Par « période critique », on entend au sens de l'invention un intervalle de temps durant lequel la consommation d'une ressource dépasse, ou présente une forte probabilité (e.g. >80%) de dépasser un seuil prédéterminé d'utilisation maximum. Ainsi une période critique est un intervalle de temps présentant un risque important de survenu de dysfonctionnement.

Le terme « dysfonctionnement » au sens de l'invention correspond à la survenue d'un incident matériel ou d'une congestion sur la structure informatique hébergeant une chaine applicative.

Dans la suite de la description, les mêmes références sont utilisées pour désigner les mêmes éléments.

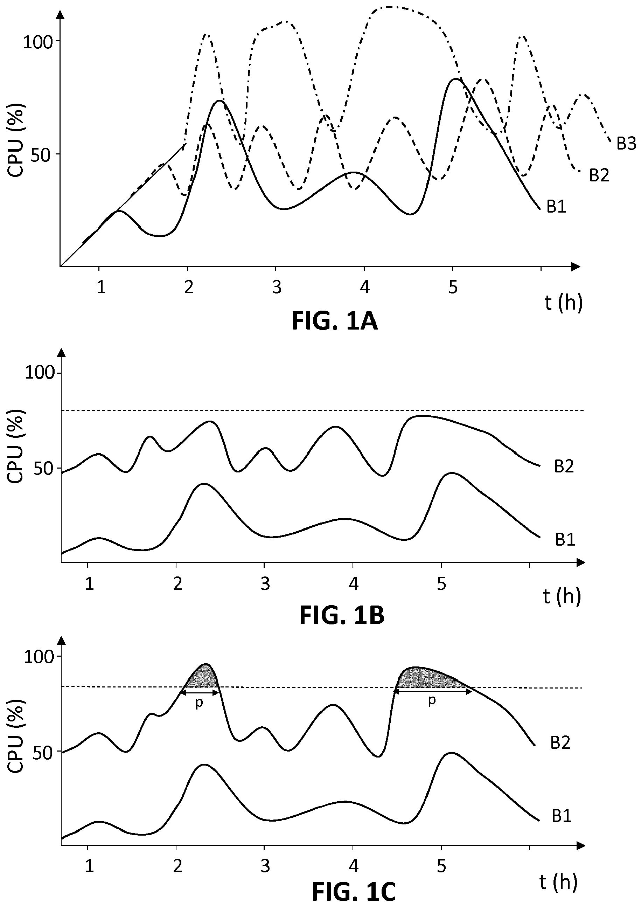

**Les** **figures 1A, 1B e 1C** illustrent la consommation de ressources, ici le taux d'occupation du CPU, en fonction du temps, par des briques applicatives (B1, B2, B3) hébergées par différentes infrastructures informatiques. La Figure 1A présente les consommations en ressources des différentes briques applicatives en fonction des capacités des CPU de la structure informatique sur laquelle elles sont actuellement hébergées.

La figure 1B présente le cumul théorique en fonction du temps des consommations en CPU sur structure informatique 21 des briques applicatives B1 et B2. Ainsi, le cumul théorique de la consommation de ces deux briques applicatives n'entraine pas de dépassement d'un seuil prédéterminé d'utilisation maximum (représenté par une ligne pointillée). Une méthode classique de validation de la mutualisation de ces deux briques applicatives sur l'infrastructure informatique pourrait donc valider une telle mutualisation.

Pourtant, une telle mutualisation en situation réelle pourrait entrainer des dépassements de seuil prédéterminé d'utilisation maximum, correspondant à des périodes critiques p comme cela est présenté à la Figure 1C. La figure 1C représente, en fonction du temps, les consommations en CPU qui pourraient être observées lorsque les briques applicatives B1, B2 sont hébergées en production sur une même structure informatique de production 21. Cette figure 1C illustre une déviation possible entre les consommations de ressources issues de calculs théoriques et celles qui pourraient réellement être observées. En effet, le comportement de briques applicatives installées sur une même structure informatique peut dévier des calculs théoriques. Ainsi, la consommation observée d'une chaine applicative sur une structure informatique peut être différente de la consommation calculée à partir des consommations individuelles des briques applicatives telle qu'observées sur des infrastructures informatiques différentes. Cela est d'autant plus vrai, lorsqu'une pluralité de briques applicatives est considérée car chacune des briques applicatives peut avoir un impact différent sur une pluralité de ressources.

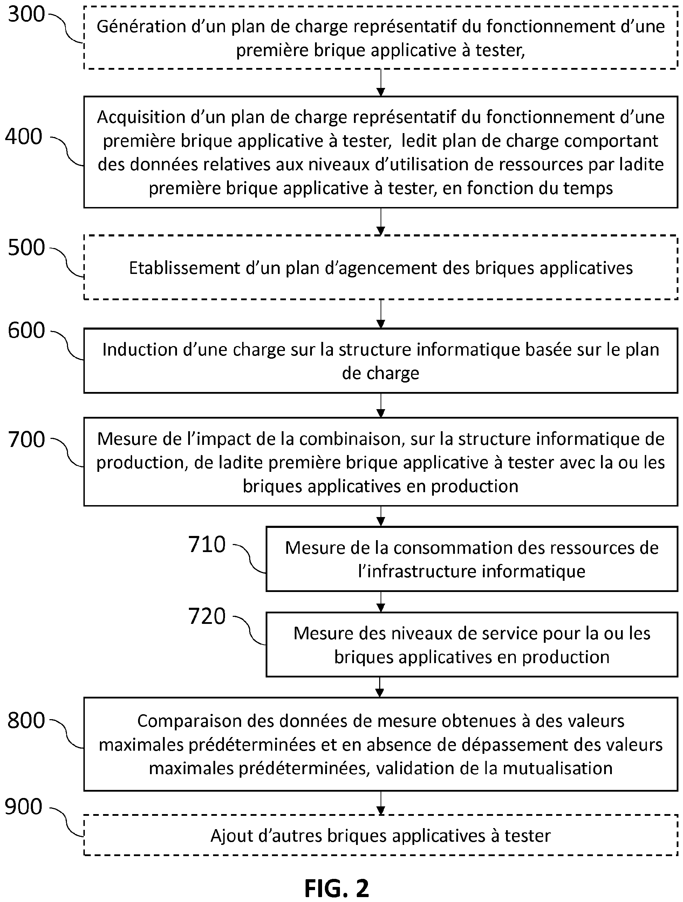

Ainsi, les inventeurs ont développé un nouveau procédé de validation de la mutualisation de briques applicatives 211, 212, 221, 231 sur une infrastructure informatique 20, ladite infrastructure informatique 20 hébergeant, sur une structure informatique de production 21, une ou plusieurs briques applicatives en production 211, 212. La **figure 2** illustre schématiquement un procédé de validation de la mutualisation de briques applicatives selon l'invention.

Comme cela est présenté dans **la** **figure 2****,** le procédé de validation selon l'invention comprend une première étape d'acquisition 400 d'un plan de charge 421 représentatif du fonctionnement d'une première brique applicative à tester 221. Un plan de charge peut être utilisé pour générer des contraintes sur une structure informatique simulant l'utilisation de ressources par la brique applicative à tester.

Le plan de charge 421 comporte généralement des données relatives aux niveaux d'utilisation de ressources, en fonction du temps, par une brique applicative par exemple ladite première brique applicative à tester 221. Ainsi, le fichier de configuration de la charge, définissant le plan de charge 421 à appliquer à une infrastructure informatique, comporte généralement des données relatives à un identifiant d'une ressource. Conformément aux figures 1A, 1B & 1C, la ressource identifiée peut être un taux d'occupation processeur mais de nombreuses autres ressources peuvent être considéré telles que lecture/écriture d'un disque, lecture/écriture d'un réseau, ou taux d'utilisation d'une mémoire. Le fichier de configuration comporte également le niveau d'utilisation de ladite ressource identifiée en fonction du temps. Le niveau d'utilisation de ladite ressource identifiée ou niveau de charge va dépendre de la ressource concernée par la charge et correspond par exemple à un pourcentage d'occupation pour le processeur, ou pour la mémoire un débit de lecture/écriture, ou une valeur absolue pour la mémoire.

Le fichier de configuration du plan de charge peut également comprendre des champs relatifs à :
- la date de début de simulation, il s'agit par exemple d'une date absolue évaluée relativement à une horloge interne d'un dispositif produisant la perturbation ou d'une date relative au début d'un scénario de test,
- la durée de simulation : par exemple un nombre de secondes.

Les dates de début, durée et niveau de charges sont aussi appelés des paramètres de plan de charge. Un même plan de charge peut comprendre les niveaux d'utilisation de toutes les ressources impactées par une brique applicative.

Certaines briques applicatives présentent une saisonnalité pour leur utilisation et cela affecte l'utilisation des ressources par ces briques applicatives. Ainsi, de préférence, le niveau d'utilisation d'une ressource par une brique applicative est inscrit dans le fichier de configuration en fonction du temps dans un référentiel calendaire. Par exemple, le niveau d'utilisation d'une ressource par une brique applicative est inscrit dans le fichier de configuration en fonction du temps dans un référentiel de journée calendaire, de semaine calendaire, de mois calendaire ou d'année calendaire. De façon plus préférée, considérant la saisonnalité et donc les répétitions, le niveau d'utilisation d'une ressource par une brique applicative est inscrit dans le fichier de configuration en fonction du temps dans un référentiel de journée calendaire, de semaine calendaire, ou de mois calendaire. De façon plus préférée, le niveau d'utilisation d'une ressource par une brique applicative est inscrit dans le fichier de configuration en fonction du temps dans un référentiel de semaine calendaire.

Le fichier de configuration du plan de charge peut également comprendre des informations sur les éventuels pics de consommation en ressource d'une brique applicative. Un pic de consommation peut être aisément identifié par l'homme du métier. La présence d'une telle information dans le fichier de configuration du plan de charge permet dans le cadre de la mise en oeuvre du procédé selon l'invention de plus facilement concentrer les simulations sur des pics de consommation.

Le procédé de validation selon l'invention comprend également une étape d'induction 600 d'une charge sur la structure informatique de production 21 basée sur le plan de charge 421.

Avantageusement, l'étape d'instruction 600 d'une charge est réalisée sur une période de temps suffisante pour mettre en oeuvre au moins trois pic de consommation de ressources, de préférence au moins cinq pics de consommation de ressources. De façon préférée, le procédé selon l'invention est avantageusement réalisé sur une période d'au moins de 90 jours.

L'induction de la charge sur la structure informatique basée sur le plan de charge peut comporter les sous étapes suivantes :
- une étape d'extraction, lors de laquelle le dispositif de simulation 10 extrait du plan de charge 421 des codes d'instructions correspondant aux niveaux d'utilisation de ressources par une brique applicative. Lesdits codes d'instructions permettent de générer une contrainte sur une structure informatique similaire au niveau d'utilisation de ressource par la brique applicative. Dans une mise en oeuvre, le plan de charge 421 correspond à un fichier de configuration. Dans des variantes, le plan de charge peut être acquis par une ou plusieurs requêtes émises vers un système de gestion de base de données 32. La lecture du fichier de configuration de charge permet au dispositif de simulation 10 d'obtenir une liste des charges à mettre place, ainsi que les caractéristiques de ces charges permettant de simuler les niveaux d'utilisation des ressources par la brique applicative.
- une étape de configuration de la charge, lors de laquelle les codes d'instructions sont modifiés de façon à ce que lesdits codes d'instructions modifiés soient aptes à générer des contraintes, sur la structure informatique de production 21, dont l'intensité est inférieure aux niveaux d'utilisation de ressources par la brique applicative à tester. Par exemple, le dispositif de simulation 10 ou la structure informatique de production 21 utilise l'identifiant de ressource pour extraire, du fichier de configuration, des codes de charge correspondant à ladite ressource. Il est possible de paramétrer à cette étape la durée de la charge, par exemple, en modifiant les codes instructions de la charge en fonction de la durée de la charge souhaitée. Il est également possible de paramétrer l'intensité de la charge ou de la contrainte, par exemple, en modifiant les codes instructions de la charge de façon à n'induire qu'une fraction de la charge correspondant au niveau d'utilisation de ressources par ladite première brique applicative. Une fois la configuration acquise par le dispositif de simulation, il passe à une étape 630 de mise en place de la charge sur l'infrastructure informatique cible.
- une étape de déploiement de la charge lors de laquelle le dispositif de simulation 10 copie, sur la structure informatique de production 21 les codes d'instructions modifiés.
- une étape de planification de la charge lors de laquelle une planification de la charge est réalisée par l'émission d'une commande de planification (par exemple une commande « at »), dont les paramètres sont la date de début de perturbation et une ligne de commande. La ligne de commande comporte un fichier exécutable et éventuellement des paramètres. Le fichier exécutable est celui qui a été déployé.

Les étapes de configuration, de déploiement et de planification sont exécutées indépendamment, par exemple, depuis le dispositif de simulation 10, depuis un serveur de test via un shell distant tel que telnet ou ssh ou directement par la structure informatique de production 21.

Le fichier de configuration comporte des données relatives aux niveaux d'utilisation de ressources en fonction du temps, avantageusement sous un référentiel calendaire. Lors du test, les niveaux d'utilisation de ressources peuvent être alignés à la date de réalisation de la simulation. Dans la pratique toutes les horloges des serveurs peuvent être synchronisées via un même serveur NTP. Il est donc aisé, connaissant la date de début de la simulation, de fixer des dates pour les charges et notamment les pics de consommation. Ainsi les charges simulent une activité classiquement observée avec une périodicité issue de la saisonnalité des activités métiers. Cette synchronisation facilite la délégation de la gestion de la panification aux serveurs applicatifs par le dispositif de simulation et permet de mieux simuler une utilisation de la brique applicative à tester 421 sur la structure informatique de production 21.

Suite à l'étape d'induction 600 de la charge, le procédé de validation selon l'invention comporte une étape de mesure 700 de l'impact de la combinaison, sur la structure informatique de production 21, de la charge induite, simulant ladite première brique applicative à tester 231, avec la ou les briques applicatives en production 211, 212.

Cette étape de mesure comporte généralement, a) la mesure 710 de la consommation des ressources de la structure informatique de production 21 et b) la mesure 720 des niveaux de service pour la ou les briques applicatives en production. Elle permet la génération de données pouvant être utilisées dans une étape ultérieure de comparaison. Ainsi, le procédé selon l'invention peut comporter l'utilisation d'au moins une sonde configurée pour collecter des données. Une telle mesure peut être réalisée, par exemple, via une exécution de l'application JMeter.

Le procédé selon l'invention peut faire appel à une sonde ou à une pluralité de sondes. La ou les sondes permettent de collecter des données sur la consommation des ressources de l'infrastructure informatique et les niveaux de service pour la ou les briques applicatives en production. Plusieurs ressources peuvent être mesurées en parallèle de même que plusieurs indicateurs de niveau de service peuvent être suivis en parallèle. De préférence, les niveaux de service sont mesurés régulièrement et peuvent correspondre par exemple à temps de réponse de recherche de moins d'une seconde. Avantageusement, les niveaux de services obtenus pour les briques applicatives de la structure informatique de production avant la mutualisation ou la mise en oeuvre du procédé de validation de la mutualisation sont mesurés de façon à établir un niveau de service de référence et les niveaux de services obtenus lors du procédé de validation de la mutualisation sont comparés auxdits niveau de service de référence.

Ces mesures de la consommation des ressources peut être réalisée à partir d'une sonde, par exemple une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes d'état de fonctionnement peuvent être associées à chaque ressource pour remonter les informations de mesure ou métriques, représentant l'état de fonctionnement des ressources. Pour chaque ressource, la ou les sondes d'état de fonctionnement définissent un identifiant de la ressource et un état de fonctionnement. L'état de fonctionnement de chaque ressource peut être suivi en continue ou à des intervalles configurables de façon à obtenir des informations pour chaque ressource d'état de fonctionnement en fonction du temps. Ces informations peuvent être stockées dans une mémoire.

Enfin, le procédé de validation selon l'invention comporte une étape de comparaison 800 des données de mesure de la consommation des ressources de la structure informatique de production 21 et des données de mesure de niveaux de service à des valeurs maximales prédéterminées. Lors de cette étape, l'absence de dépassement des valeurs maximales prédéterminées permet de valider la mutualisation des briques applicatives. La validation peut être accompagnée de la génération d'un rapport de mutualisation comportant par exemple des données sur la structure informatique de production 21, les briques applicatives en production 211, 212, la ou les briques applicatives à tester 221, les mesures réalisées et/ou les valeurs maximales prédéterminées.

Dans le cadre de la comparaison avec les données de mesure de la consommation des ressources, les valeurs maximales prédéterminées peuvent par exemple correspondre à des seuils prédéterminés d'utilisation maximum. Dans le cadre de la comparaison avec les données de mesure de niveaux de service, les valeurs maximales prédéterminées peuvent par exemple correspondre à des seuils fixés lors de la mise en place des applications. Les valeurs maximales prédéterminées peuvent être également librement fixées par la direction des systèmes d'information dans le cadre de sa politique de gestion de la performance de ses installations. Il faut comprendre qu'il peut être équivalent d'utiliser des valeurs minimales prédéterminées à la place de valeurs maximales prédéterminées. Cela est notamment le cas pour l'appréciation des niveaux de service.

Une fois la mutualisation d'une première brique applicative à tester validée, le procédé de validation selon l'invention peut comporter une étape supplémentaire 900 correspondant à une répétition des étapes du procédé selon l'invention sur la base d'une ou de plusieurs autres briques applicatives à tester.

Dans le cas d'une ou de plusieurs autres briques applicatives à tester, en parallèle de l'induction d'une charge sur la structure informatique basée sur le plan de charge des une ou plusieurs autres briques applicatives à tester, le procédé selon l'invention peut induire une charge correspondant à une fraction ou à la totalité de l'intensité de charge associée à la première brique applicative à tester.

Ainsi, le procédé selon l'invention peut être répété et permettre l'induction d'une charge, sur la structure informatique de production 21, basée sur le plan de charge d'au moins deux briques applicatives à tester, de préférence d'au moins trois briques applicatives à tester et de façon encore plus préférée d'au moins cinq briques applicatives à tester.

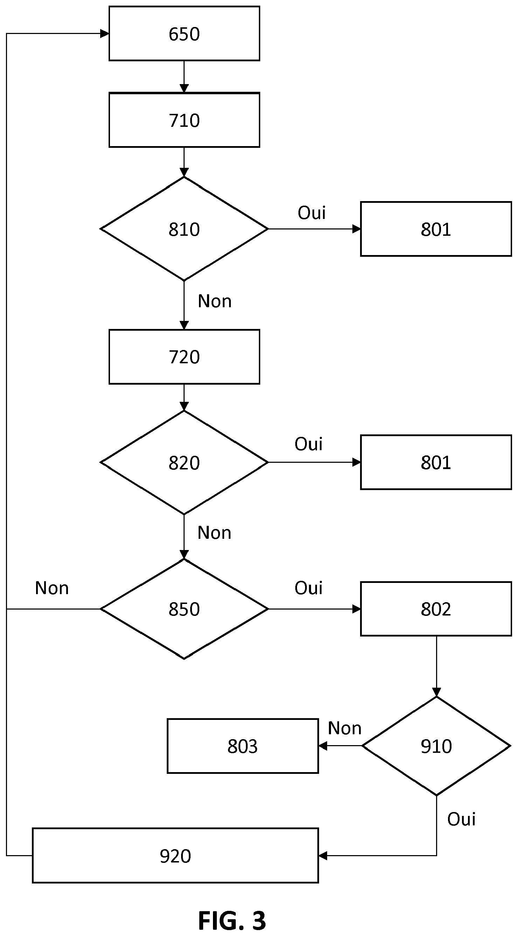

La **figure 3** illustre schématiquement une représentation fonctionnelle non limitative d'un mode de réalisation pour contrôler le déroulement d'un procédé de validation de la mutualisation de briques applicatives selon l'invention.

Dans ce mode de réalisation, le procédé comporte une étape 650 correspondant à l'induction d'une charge, sur une structure informatique de production 21, à une fraction de l'intensité d'un plan de charge acquis lors d'une étape précédente. En effet, il est avantageux, lors d'une première induction de charge pour une brique applicative à tester, de n'induire qu'une fraction de l'intensité de la charge prévue par le plan de charge à une date donnée. C'est-à-dire que seule une fraction de la charge correspondant au niveau d'utilisation de ressources par la brique applicative à tester est induite. Ainsi, de façon préférée, lors d'une première induction de charge pour une brique applicative à tester, l'intensité de la charge correspond à 90 % ou moins du niveau d'utilisation de ressources par la brique applicative à tester tel que configuré dans le plan de charge. De façon plus préférée, lors d'une première induction de charge pour une brique applicative à tester, l'intensité de la charge correspond à 80 % ou moins, de façon encore plus préférée 70 % ou moins, par exemple 50 % ou moins du niveau d'utilisation de ressources par la brique applicative à tester tel que configuré dans le plan de charge. En effet, étant donné que la validation se fait sur une infrastructure en production, en parallèle de la mise en oeuvre de brique applicative en production 211, 212, il est préférable de ne pas induire de dysfonctionnement dans l'infrastructure informatique. Ainsi, une induction de charge à une fraction de l'intensité observée lors d'une utilisation en production sur une structure informatique 22, 23 permet de réduire le risque de dysfonctionnement lors de l'induction de la charge sur la structure informatique de production 21.

Comme mentionné précédemment, l'étape 710 correspond à la mesure de la consommation globale des ressources par la structure informatique de production 21. Les données de mesure sont ensuite comparées 810 à des valeurs maximales prédéterminées. Si un ou plusieurs seuils sont dépassés alors la brique applicative à tester 221 est considérée comme étant incompatible 801 avec les briques applicatives déjà en production sur la structure informatique en production 211, 212. Si les seuils ne sont pas dépassés alors le procédé peut se poursuivre.

Comme mentionné précédemment, l'étape 720 correspond à la mesure de niveau de service des briques applicatives en production 211, 212 sur la structure informatique en production 21. Les données de mesure sont ensuite comparées 820 à des valeurs maximales prédéterminées. Si un ou plusieurs seuils sont dépassés alors la brique applicative à tester 221 est considérée comme étant incompatible 801 avec les briques applicatives déjà en production sur la structure informatique de production 21. Si les seuils ne sont pas dépassés alors le procédé peut se poursuivre.

Lors d'une première induction de charge pour une brique applicative à tester, celle-ci est généralement faite à une fraction de l'intensité de charge telle que définie dans le plan de charge. Ainsi, lors de l'étape 850, si l'intensité de charge induite lors de l'étape précédente 650 n'était pas équivalente à 100 % ou plus de l'intensité de charge prévue dans le plan de charge alors l'étape 650 est répétée avec une fraction plus importante de l'intensité de charge prévue dans le plan de charge. Si 100 % ont été atteint alors la brique applicative à tester est considérée comme étant compatible 802 avec les briques applicatives déjà en production sur l'infrastructure informatique.

Comme cela est illustré sur la figure 3, lorsqu'une brique applicative est considérée comme étant compatible 802, le procédé selon l'invention peut comporter une étape 910 consistant à vérifier s'il est souhaitable de mutualiser des briques applicatives supplémentaires sur la structure informatique de production 21. Si tel n'est pas le cas le procédé selon l'invention est terminé 803 et peut comporter l'émission d'un rapport comportant, en fonction du temps, les charges induites et les réponses en termes de données de mesure des ressources consommées ainsi que de données de niveau de service mesuré sur les briques applicatives en production. S'il est souhaitable de mutualiser des briques applicatives supplémentaires alors le procédé peut être répété avec par exemple une autre brique applicative à tester 231 et comporter alors le chargement du plan de charge 431 de l'autre brique applicative à tester 231.

Le procédé de validation selon l'invention peut comprendre une étape préalable facultative de génération 300 d'un plan de charge 421 représentatif du fonctionnement d'une première brique applicative à tester 221.

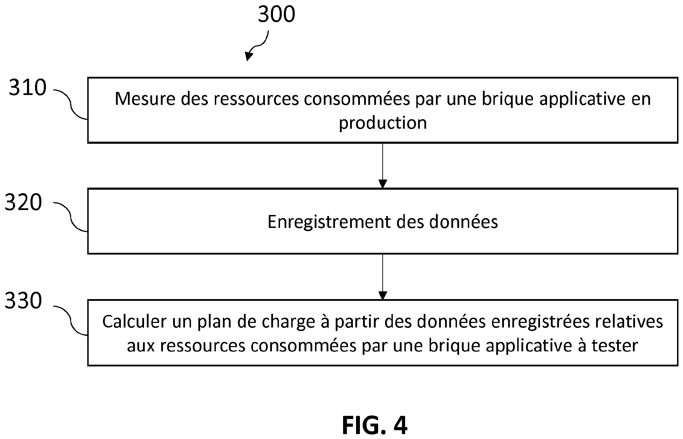

Comme cela est représenté à **la** **figure 4****,** cette étape facultative 300 peut comprendre plusieurs sous-étapes. Le procédé de validation selon l'invention peut comprendre une étape 310 préalable de mesure de la consommation des ressources par une première brique applicative à tester 221 de façon à établir un plan de charge 421 représentatif du fonctionnement d'une première brique applicative à tester. De façon préférée, cette étape préalable 310 de mesure de la consommation des ressources peut être réalisée pour plusieurs briques applicatives à tester et dans des conditions d'exploitation réelles de ces dites briques applicatives à tester.

La mesure de la consommation des ressources peut être réalisée via l'utilisation d'au moins une sonde 35 configurée pour collecter des données. Le procédé selon l'invention peut faire appel à une sonde 35 ou à une pluralité de sondes. La ou les sondes permettent de collecter des données sur le niveau d'utilisation des ressources par les briques applicatives. Comme évoqué précédemment, les informations collectées peuvent par exemple correspondre des valeurs de pourcentage d'utilisation de ressources. Ces données peuvent ensuite être enregistrées 320 par exemple dans une base de données dédiée 32 permettant la préparation des plans de charge.

Avantageusement, l'étape préalable 310 de mesure de la consommation des ressources est réalisée sur une période d'au moins trois mois, de préférence d'au moins six mois et de façon encore plus préférée d'au moins douze mois de façon à déterminer la saisonnalité de la consommation des ressources par les briques applicatives.

La détermination de la saisonnalité de la consommation des ressources permet d'identifier d'éventuels pics de consommation pendant lesquels la consommation de ressource est forte. Ces pics de consommation sont généralement répétés à une fréquence dépendante de la saisonnalité de l'activité métier. Ainsi, ces pics de consommation peuvent par exemple être répétés tous les jours, toutes les semaines ou bien tous les mois à des intervalles de temps régulier.

Le procédé selon l'invention peut également comporter une étape préalable facultative de configuration de la ou des sondes 35 correspondant à la mise en place d'une ou plusieurs sondes sur les structures informatiques comportant les briques applicatives à tester.

Le procédé selon l'invention peut également comprendre une étape 330 de calcul d'un plan de charge à partir des données enregistrées de ressources consommées par chaque brique applicative à tester lors de son utilisation en production. Cette étape peut par exemple reposer sur la transformation des données de sonde comportant des valeurs chiffrées d'utilisation de ressource en des données de charge comportant des requêtes permettant lors de leur mise en oeuvre 650 sur une structure informatique de production 21 de générer une utilisation des ressources équivalente à l'utilisation des ressources mesurée dans l'étape 310.

Le procédé selon l'invention peut également comprendre une étape 500 correspondant à l'établissement d'un plan d'agencement permettant, malgré le cumul de plusieurs briques applicatives sur une même infrastructure informatique, de ne pas générer de périodes critiques.

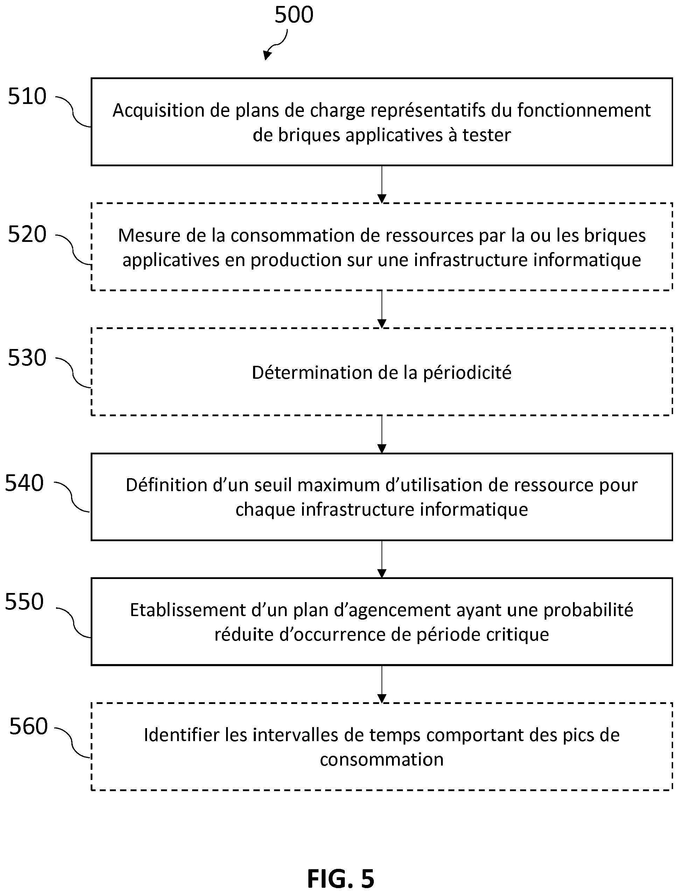

Comme cela est présenté à **la** **figure 5****,** l'étape 500 peut comporter plusieurs sous-étapes.

L'étape 510 correspond à l'acquisition des plans de charge représentatifs du fonctionnement de briques applicatives à tester. Avantageusement, cette étape permet l'acquisition d'une pluralité de plans de charge 421, 431 correspondants à une pluralité de briques applicatives 221, 231 qu'il serait souhaitable de mutualiser sur une même structure informatique de production 21.

L'étape 520 correspond à la mesure de la consommation de ressources par la ou les briques applicatives en production sur une structure informatique. Avantageusement, cette étape permet d'obtenir les données de consommation de ressource dans le temps, de préférence sur une période d'au moins un mois, de façon plus préférée d'au moins trois mois. Cette étape peut également correspondre à l'acquisition de la consommation de ressources sur plusieurs structures informatiques. En effet, dans le cadre de la mutualisation d'une pluralité de briques applicatives il est possible que plusieurs structures informatiques soient considérées pour la mutualisation.

Avantageusement, le procédé selon l'invention comporte une sous-étape 530 de détermination de la périodicité de la consommation en ressources des briques applicatives en production. La détermination de la périodicité correspond à l'analyse de la consommation dans le temps de façon à identifier des schémas de répétition permettant de réduire les données de mesure de consommation à la période de temps se répétant la plus courte possible. Cette réduction peut se baser sur l'identification de pics de consommation durant lesquels la consommation de ressource est la plus forte et l'identification de répétitions dans le temps de ces pics de consommation. Par exemple, il est possible sur certaines briques applicatives d'identifier des pics de consommation en fin de semaine correspondant à des accès aux services de gestion du temps des employés d'une société. Ainsi, pour certaines briques applicatives, les mesures de consommation de ressources pourront être réduites à des répétitions de séquence d'une semaine. Avantageusement, il est alors possible d'utiliser une méthode de traitement mathématique permettant de rassembler sur une période de temps l'information mesurée pendant de nombreuses semaines. Par exemple, les valeurs de niveaux d'utilisation des ressources sur la période peuvent correspondre à la moyenne ou la médiane des valeurs observées sur cette même période répétée sur l'ensemble des mesures. De façon préférée, les valeurs de niveaux d'utilisation des ressources sur la période peuvent correspondre à un quantile, de façon plus préférée à un quantile supérieur à 60, de façon encore plus préféré un quantile supérieur à 80 des valeurs observées sur cette même période répétée sur l'ensemble des mesures.

L'étape préalable 310 de mesure de la consommation des ressources est réalisée sur une période d'au moins trois mois, de préférence d'au moins six mois et de façon encore plus préférée d'au moins douze mois de façon à déterminer la périodicité de la consommation des ressources par les briques applicatives.

La sous-étape 540 correspond à la définition d'un seuil maximum d'utilisation de ressource pour chaque infrastructure informatique. Ce seuil peut être donné par les constructeurs des ressources ou bien par la politique interne de la direction des systèmes d'information.

La sous-étape 550 correspond à l'établissement d'un plan d'agencement ayant une probabilité réduite d'occurrence de période critique. Ce plan d'agencement peut par exemple être obtenu par l'utilisation de différents procédés d'optimisation telle qu'une fonction coûts. Plus particulièrement, cette sous étape peut correspondre à l'établissement d'un plan d'agencement de briques applicatives ayant une probabilité réduite d'occurrence de période critique, ladite période critique étant un intervalle de temps durant lequel la consommation d'une ressource dépasse un seuil préalablement défini d'utilisation maximum.

La sous-étape 560 correspond à l'identification des intervalles de temps comportant des pics de consommation.

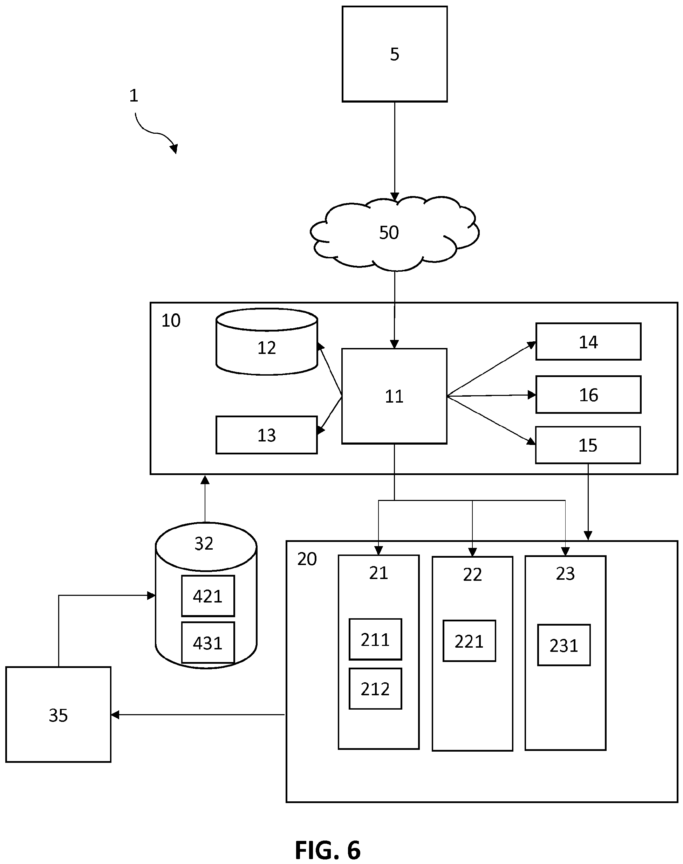

**La** **figure 6** illustre schématiquement une représentation fonctionnelle non limitative d'un mode de réalisation d'un système 1 de validation de la mutualisation de briques applicatives 211, 212, 221, 231 sur une infrastructure informatique 20, ladite infrastructure informatique 20 hébergeant, sur une structure informatique de production 21, une ou plusieurs briques applicatives en production 211, 212.

Sur la figure 6 est affiché un terminal utilisateur 5 via lequel, un utilisateur peut adresser, par l'intermédiaire d'un réseau de communication 50, une requête à une ou plusieurs structures informatique 21, 22, 23.

Le terminal utilisateur 5 est un ordinateur, une tablette numérique, un téléphone portable, ou plus généralement tout dispositif permettant à un utilisateur d'émettre des requêtes, via un réseau de communication 50 (par exemple LAN, WLAN, ou PAN, journal d'une base de données, courriel), vers une chaine applicative distante. A cet égard, le terminal utilisateur 5 peut être pourvu d'une application cliente permettant d'envoyer des requêtes (c.à.d. des demandes de service) à l'infrastructure informatique 20 et d'en interpréter les réponses. Cette application cliente est, par exemple, un navigateur Web FireFox ®, Fennec ®, Opéra ®, Opéra Mobile ®, Internet Explorer®, Google Chrome® par exemple), ou un navigateur ftp (tel que FileZilla®).

Chacune des structures informatiques 21, 22, 23 peut héberger une ou plusieurs briques applicatives 211, 212, 221, 231. Le terminal utilisateur 5 est, en outre, configuré pour recevoir, depuis les structures informatique 21, 22, 23, une réponse à sa requête. Ces requêtes/réponses se font dans le cadre d'actes métier initiés par l'utilisateur afin de bénéficier d'un service applicatif fourni par la chaine applicative qui est déployée sur l'infrastructure informatique 20. Les briques applicatives sont mises à disposition par l'une des structures informatique 21, 22, 23 sur demande depuis le terminal utilisateur 5. Les services proposés par les briques applicatives peuvent comprendre, par exemple, un service de courriel, un service d'agenda, la navigation dans un système d'information, un service d'interrogation de bases de données en ligne, un service d'enseignement à distance, un service de vente et/ou de réservation en ligne, un service de remplissage et de soumission d'un formulaire électronique, un service de streaming, un service de téléchargement et/ou de chargement de contenus.

Chaque structure informatique 21, 22, 23 peut comprendre un microprocesseur, des moyens de stockage (tel qu'un disque dur qu'il soit local ou distant), et une interface de communication (par exemple une interface réseau de type Ethernet, FiberChannel, InfiniBand...). Le microprocesseur du dispositif serveur, les moyens de stockage du dispositif serveur et l'interface de communication du dispositif serveur sont interconnectés par un bus. Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif émet ou reçoit un message, ce message est émis ou reçu par une interface de communication du dispositif.

Comme déjà mentionné le système selon l'invention permet de valider la mutualisation des briques applicatives sur une ou plusieurs structures informatiques 21, 22, 23. Pour cela, le système comporte un dispositif de simulation 10 comprenant un moyen de stockage 12 apte à, de préférence configuré pour, enregistrer un plan de charge 421 représentatif du fonctionnement d'une première brique applicative à tester 221, ledit plan de charge 421 comportant des données relatives aux niveaux d'utilisation de ressources par ladite première brique applicative à tester 221, en fonction du temps.

Le dispositif de simulation 10 selon l'invention comporte également un module d'application de contrainte 11 apte à, de préférence configurés pour, induire une charge sur la structure informatique de production 21 basée sur le plan de charge 421.

Le dispositif de simulation 10 selon l'invention comporte également un module de surveillance 15 apte, de préférence configuré pour, à mesurer l'impact de la combinaison, sur la structure informatique de production 21, de ladite première brique applicative à tester 221 avec la ou les briques applicatives en production 211, 212 et configuré pour :
∘ mesurer la consommation des ressources de la structure informatique de production 21, et
∘ mesurer des niveaux de service pour la ou les briques applicatives en production.

Le dispositif de simulation 10 selon l'invention comporte en outre un module de validation 16, apte à, de préférence configuré pour, comparer des données de consommation des ressources et de niveaux de service à des valeurs maximales prédéterminées, et, en absence de dépassement des valeurs maximales prédéterminées, à valider la mutualisation.

Le dispositif de simulation 10 selon l'invention comporte en outre un module d'interface 13 homme-machine (IHM), apte à, de préférence configuré pour, intervenir par exemple dans :
- la définition et la mémorisation des valeurs maximales prédéterminées,
- la définition et la mémorisation des seuils maximum d'utilisation des ressources,
- la définition et la mémorisation de l'intensité de charge à appliquer lors de l'induction 600,
- la définition et la mémorisation des paramètres de mémorisation et de transmission des informations générées par le système, et
- la définition et la mémorisation des valeurs observées de mesure de la consommation des ressources ou des niveaux de services suite à l'induction 600 de la charge.

Ainsi, en se référant de nouveau à la figure 1, le dispositif de mutualisation 10, indépendant ou installé au sein d'une infrastructure informatique 20 est configuré pour exécuter un ou plusieurs scénarios de test de mutualisation de briques applicatives. Un tel dispositif ainsi que le système auquel il est intégré et le procédé selon l'invention qu'il est apte à mettre en oeuvre permettent de réaliser des validations de mutualisation plus performantes que celles pouvant être réalisées jusqu'à présent.

En effet, le procédé de validation selon l'invention est simple à mettre en oeuvre. Il permet de prendre en considération la saisonnalité des activités métiers. Il permet d'obtenir un résultat s'affranchissant des biais pouvant résulter d'essais théorique ou sur des machines virtuelles non utilisées tout en réduisant le risque de dysfonctionnement pouvant résulter de sa mise en oeuvre sur des structure informatique en production.

Tous ces avantages contribuent donc à réduire les coûts de gestion des infrastructures informatiques d'une entreprise.

## Revendications

1. Procédé de validation de la mutualisation de briques applicatives (211, 212, 221, 231) sur une infrastructure informatique (20), ladite infrastructure informatique (20) hébergeant, sur une structure informatique de production (21), une ou plusieurs briques applicatives en production (211, 212), ledit procédé étant **caractérisé en ce qu'**il comprend les étapes suivantes :
- Acquisition (400) d'un plan de charge (421) représentatif du fonctionnement d'une première brique applicative à tester (221), ledit plan de charge (421) comportant des données relatives au niveau d'utilisation de ressources par ladite première brique applicative à tester (221), en fonction du temps ;
- Induction (600) d'une charge sur la structure informatique de production (21) basée sur ledit plan de charge (421) ;
- Mesure (700) de l'impact, sur la structure informatique de production (21), de la charge induite combinée avec la ou les briques applicatives en production (211, 212) comportant :
a) la mesure de la consommation des ressources de la structure informatique de production (21) ; et
b) la mesure des niveaux de service pour la ou les briques applicatives en production (211, 212) ; et
- Comparaison (800) des données de mesure a) et b) obtenues, à des valeurs maximales prédéterminées de consommation de ressources et de niveau de services et, en absence de dépassement des valeurs maximales prédéterminées, validation de la mutualisation.

2. Procédé de validation selon la revendication 1 **caractérisé en ce que**, lors d'une première induction de charge, la charge induite présente une intensité de charge équivalente à 90 % ou moins du niveau d'utilisation de ressources de ladite première brique applicative à tester (221).

3. Procédé de validation selon la revendication 2 **caractérisé en ce qu'**en absence de dépassement des valeurs maximales prédéterminées lors de l'étape de comparaison (800), l'étape d'induction (600) de charge est répétée avec une charge induite présentant une intensité de charge supérieure à l'intensité de charge de la précédente induction, et **en ce que**, lors de l'étape de comparaison (800), la mutualisation est validée seulement si la charge induite présente une intensité de charge équivalente à 100 % ou plus du niveau d'utilisation de ressources de ladite première brique applicative à tester (221).

4. Procédé de validation selon l'une des revendications 1 à 3, **caractérisé en ce que** l'induction (600) d'une charge sur la structure informatique de production (21) basée sur le plan de charge (421) comporte les sous étapes suivantes :
- une étape d'extraction, lors de laquelle des codes d'instructions sont extraits du plan de charge (421), lesdits codes d'instructions étant aptes à générer des contraintes, sur la structure informatique de production (21), à une intensité équivalente aux niveaux d'utilisation de ressources de la brique applicative à tester (221) ;
- une étape de configuration de la charge, lors de laquelle les codes d'instructions sont modifiés de façon à ce que lesdits codes d'instructions modifiés soient aptes à générer des contraintes, sur la structure informatique de production (21), à une intensité inférieure aux niveaux d'utilisation de ressources par la brique applicative à tester (221) ; et
- une étape de déploiement de la charge lors de laquelle les codes d'instructions modifiés sont copiés sur la structure informatique de production (21).

5. Procédé de validation selon l'une des revendications 1 à 4, **caractérisé en ce que** le plan de charge (421) est établit selon un référentiel de temps calendaire et est synchronisé lors de l'étape d'induction (600) avec la date à laquelle le procédé de validation est mis en oeuvre.

6. Procédé de validation selon l'une des revendications 1 à 5, **caractérisé en ce que** le procédé comporte une étape supplémentaire (900) correspondant, une fois qu'une mutualisation est considérée comme validée, à une répétition des étapes du procédé avec une ou plusieurs autres briques applicatives à tester.

7. Procédé de validation selon l'une des revendications 1 à 6, **caractérisé en ce qu'**il comporte en outre une étape préalable (300) de mesure de la consommation des ressources par une brique applicative de façon à établir un plan de charge comportant des données relatives au niveau d'utilisation de ressources par ladite brique applicative, en fonction du temps.

8. Procédé de validation selon la revendication 7, **caractérisé en ce que** l'étape préalable (300) de mesure de la consommation des ressources est réalisée sur une période d'au moins trois mois de façon à déterminer une périodicité de pics de consommation des ressources par la brique applicative.

9. Procédé de validation selon la revendication 8, **caractérisé en ce que** l'étape d'induction (600) de la charge est réalisée sur une période de temps suffisante pour mettre en oeuvre au moins trois pic de consommation de ressources, de préférence au moins cinq pics de consommation de ressources.

10. Procédé de validation selon l'une des revendications 1 à 9 **caractérisé en ce qu'**il comporte en outre une étape (500) d'établissement d'un plan d'agencement de briques applicatives sur des structures informatique (21, 22, 23), ladite étape (500) d'établissement d'un plan d'agencement comportant les sous-étapes suivantes :
- Acquisition (510) de plans de charge (411, 412, 421, 431) représentatifs du fonctionnement des briques applicatives (211, 212, 221, 231),
- Définition (540) de seuils maximums d'utilisation des ressources pour chaque structure informatique (21, 22, 23), et
- Etablissement (550) dudit plan d'agencement de briques applicatives ayant une probabilité réduite d'occurrence de période critique, ladite période critique étant un intervalle de temps durant lequel la consommation d'une ressource dépasse un seuil préalablement défini d'utilisation maximum.

11. Procédé de validation selon la revendication 10, **caractérisé en ce qu'**il comporte une sous-étape de détermination (530) de la périodicité de la consommation en ressources des briques applicatives (211, 212, 221, 231) en production.

12. Système (1) de validation de la mutualisation de briques applicatives (211, 212, 221, 231) sur une infrastructure informatique (20), ladite infrastructure informatique (20) hébergeant, sur une structure informatique de production (21), une ou plusieurs briques applicatives en production (211, 212), ledit système étant **caractérisé en ce qu'**il comprend un dispositif de simulation (10), ledit dispositif de simulation (10) comportant ;
- une base de donnée (12) configurée pour enregistrer un plan de charge (421) représentatif du fonctionnement d'une première brique applicative à tester (221), ledit plan de charge (421) comportant des données relatives aux niveaux d'utilisation de ressources par ladite première brique applicative à tester (221), en fonction du temps ;
- un module d'application de contrainte (11) configuré pour induire une charge sur la structure informatique de production (21) basée sur ledit plan de charge (421) ;
- un module de surveillance (15) configuré pour mesurer l'impact de la combinaison, sur la structure informatique de production (21), de ladite charge induite avec la ou les briques applicatives en production (211, 212) et configuré pour :
∘ a) mesurer la consommation des ressources de la structure informatique de production (21), et
∘ b) mesurer des niveaux de service pour la ou les briques applicatives en production ; et
- un module de validation (16), configuré pour comparer des données de consommation des ressources et de niveaux de service mesurées a) et b) à des valeurs maximales prédéterminées de consommation de ressources et de niveau de services, et, en absence de dépassement des valeurs maximales prédéterminées, à valider la mutualisation.
